Europäisches Patentamt

European Patent Office

Office européen des brevets

(11) Publication number: **0 208 013**
**B1**

## EUROPEAN PATENT SPECIFICATION

(45) Date of publication of patent specification: **21.06.89**

(21) Application number: **85108735.3**

(22) Date of filing: **12.07.85**

(51) Int. Cl.⁴: **A 23 L 1/325**

(54) Method of heating kneaded marine paste products.

(43) Date of publication of application:
**14.01.87 Bulletin 87/03**

(45) Publication of the grant of the patent:
**21.06.89 Bulletin 89/25**

(84) Designated Contracting States:
**DE GB**

(56) References cited:
GB-A-2 031 706
US-A-3 976 792
PATENTS ABSTRACTS OF JAPAN, vol. 7, no.
53 (C-154) 1198r, 3rd March 1983; & JP - A - 57
202 271 (BIBUN K.K.) 11-12-1982
PATENTS ABSTRACTS OF JAPAN, vol. 8, no.
102 (C-222) 1539r, 12th March 1984; & JP - A -
59 17 968 (BIBUN K.K.) 30-01-1984
FOOD TECHNOLOGY, vol. 38, no. 11,
November 1984, pages 69-80, Chicago, Illinois,
US; C.M. LEE: "Surimi process technology"

(73) Proprietor: **KABUSHIKI KAISHA KIBUN**
**14-13 Ginza 7-chome**
**Chuo-Ku Tokyo-to (JP)**

(72) Inventor: **Maruyama, Tutomu**
**1903-502, Futatsugi Sakudai**
**Matsudo-Shi Chiba-Ken (JP)**
Inventor: **Nakagawa, Norikazu**
**2-536-1, Hasama-Cho**
**Funabashi-Shi Chiba-Ken (JP)**
Inventor: **Hosokawa, Tsuyoshi**
**1-3-1101, Kiba 2-chome**
**Koto-Ku Tokyo-To (JP)**
Inventor: **Sakayori, Yuji**
**2734, Minamikase Saiwai-Ku**
**Kawasaki-Shi Kanagawa-Ken (JP)**
Inventor: **Tanaka, Shigeru**
**1-4-14, Tsushima-Kyo-Machi**
**Okayama-Shi Okayama-Ken (JP)**
Inventor: **Oomatsu, Yoshiya**
**604, Imadani**
**Okayama-Shi Okayama-Ken (JP)**

(74) Representative: **Münzhuber, Robert, Dipl.-Phys.**
**Patentanwalt Rumfordstrasse 10**
**D-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Description

This invention relates generally to kneaded marine paste products, called suisan-neri-seihin in Japan, also referred to as "surimi-based products" by the Food and Drug Administration of the U.S. Government, particularly marine paste products made from ground fish paste, called suri-mi in Japan. More particularly, this invention relates to a method of heating marine paste products to coagulate their proteins.

Marine paste products such as various fish paste products such as kamaboko and chikuwa (fish paste cakes, tubes, patties, balls, etc.) are produced by methods involving heating. Such heating may be conducted only once in some cases for the purpose of converting the raw state of fish after molding to an edible state, or twice with or without alteration of temperature, time, etc. in other cases. Also in the case of production of the so-called imitation "crab leg" kamaboko, heating is generally conducted twice. That is, the first heating is generally called the preliminary heating, which is applied to the product in the form of sheets or fibrous product cut into pieces therefrom. Then the heated product is molded into a rod-shaped product, packed in a certain amount into a bag and subjected to the second heating to be brought into an edible state.

The purpose of heating of fish paste products is to coagulate the fish meat proteins, and therefore special care is required in carrying out the heating. More specifically, in the first place, since fish paste products will foam when heated to 100°C or higher, excessive heating must be avoided. In particular, this phenomenon is markedly observed in fish paste products in the form of sheets with engraved grooves or in fibrous fish paste products.

In addition to such care, further consideration is also necessary with respect to the point that preliminary heating of paste products is not necessarily the final step. That is to say, in some cases, paste products after preliminary heating are required to undergo post-processing steps such as application of burnt marks or molding of sheet-shaped products into rod-shaped products. In such cases, the paste products to be subjected to the post-processing steps should be free of water droplets adhering to their surfaces. (Adherence of water droplets on the surface of the product should be avoided even when the heating step is the final step without accompaniment of these post-processing steps.) However, the coagulated proteins will have low water absorbability and therefore water adhering or condensed on the surface of a paste product will inevitably exist as water droplets without being absorbed by the paste product. Accordingly, when heating is conducted by the use of conventional steam (raw vapor) as the heating source, it becomes necessary to carry out drying for a long time after heating. However, prolonged drying should be avoided, since it not only increases the probability of contamination of paste products as foods by bacteria but also prolongs unduly the time for manufacturing the paste products.

US-A-3,976,792 discloses a process for preparation of a shrimp containing foodstuff. According to the first embodiment, a paste product is steamed at a temperature within the range of 100°C to 130°C. However, it is necessary to wrap the paste product prior to the steaming step since the steaming step is done employing live steam (which means steam direct from a boiler and under full pressure) (lines 28 to 34, on column 5, and the passage bridging column 6/7 of US-A-3,976,792). Further, according to the second embodiment the paste product is passed through a steam tunnel at a temperature of 80°C to 100°C. However, the steam product must be immediately passed under air jets in order to remove condensed steam from the surface thereof, because the live steam used in the prior art has a reletive humidity of approximately 100%.

## SUMMARY OF THE INVENTION

An object of the present invention is to provide a method of heating marine paste products with full consideration of the required care and the above described difficulties by a specific mode of use of superheated steam.

More specifically, the method of heating paste products according to the present invention comprises heating marine paste products in a heating chamber to coagulate the proteins of the paste products under the condtions:

(A) that superheated steam is blown as the heating source into the heating chamber;

(B) that the paste products are prevented from being contacted directly by the superheated steam being blown in its initial blown direction into the chamber; and

(C) that the temperature of the gas phase in the vicinity of the paste products is controlled at less than 100°C.

According to the present invention, paste products without adherence of water droplets can be obtained, and the drying time after the heating treatment and the energy required for drying can be reduced to a great extent.

## DETAILED DESCRIPTION OF THE INVENTION
Paste product

Marine paste products, as is well known in the art, comprise mainly ground fish meat and auxiliary starting materials such as binder, seasonings and others blended and kneaded therewith.

The "paste product" as herein mentioned refers primarily to a marine paste product molded into an appropriate shape, irrespective of whether it has been subjected to heating or not.

Heating device

Heating of the paste product according to the present invention is performed first in a heating chamber. Here, the "heating chamber" can be a chamber of any size or construction in which the atmosphere heated by the steam blown thereinto can be in contact with the paste product housed in the chamber for a specified time. The heating chamber may be of a completely sealed structure, but it ordinarily has an appropriate exhaust vent. An opening for charging and discharging paste products is necessary as a matter of course, and it is also desirable that a device for temperature detection or temperature control be installed within the heating chamber.

The paste product to be heated should be held in the heating chamber by an appropriate supporting means, which should desirably be such that the paste product will be movable in the heating chamber for uniformization of heating as well as for carrying the paste product into the heating chamber and carrying it out therefrom. One of such means is typically a belt conveyor. A belt conveyor may be provided either only in the heating chamber or so as to extend from outside through the heating chamber. Another example of the means for supporting paste product is the so-called turntable.

The superheated steam to be blown into such a heating chamber may be in any desired state. For suppressing introduction of moisture to a minimum, it is preferable to use superheated steam of a high degree of super heating, for example, one with a temperature of the order of 130 to 170°C.

The superheated steam must be blown into the heating chamber so that it will not directly contact the paste product in its blown direction. If the blown-in superheated steam directly contacts the paste product, the temperature of the paste product will be abruptly elevated, whereby there may arise the possibility of the temperature of the product exceeding 100°C to cause foaming of the product. For avoiding direct contact of the superheated steam in its blown direction with the paste product, a suitable measure is to cause the steam to flow against a baffle. The baffle in this case may be one which is provided solely for that purpose, but it is convenient to devise the belt conveyor, the turntable, etc., supporting the paste product in the heating chamber so that they will perform the same function. Thus, a preferred mode of practice comprises blowing the superheated steam against the lower side of the belt conveyor.

Temperature control

Since high-temperature superheated steam is used as the heat source, in addition to exercising care as to the manner in which the steam is blown, it is also necessary to control the temperature within the heating chamber so that the temperature of the gas phase in the neighborhood of the paste product will be less than 100°C. For controlling the temperature of the gas phase at such a level, the operation is performed so as to maintain appropriately the balance between the temperature of the superheated steam to be blown into the heating chamber and the amount of exhaust gas discharged from the heating chamber. For this purpose, a suitable measure is to use a temperature detecting device arranged appropriately in the heating chamber and a device for controlling, in cooperation with the detecting device, the temperature or the rate of feeding of the superheated steam, for example, an automatic control device. Such an instrumentation is known to those skilled in the art.

EXAMPLE

An example of the method of the present invention in which it is applied to the heating of a paste product in the form of a grooved sheet is presented below.

The grooved sheet is molded by extruding a fish paste through a slit to a molding width of 190 - 210 mm and a thickness of 1.8 - 2.1 mm.

The paste product sheet with grooves thus produced is placed on a belt conveyor housed within a tunnel type heating chamber and is thus heated by superheated steam blown toward the lower side of the conveyor through a plurality of nozzles while the sheet is continuously moved within the chamber. The conditions of this operation are as follows.

Temperature in the heating chamber: 85-99°C.
Temperature of superheated steam: 130-170°C.
Heating time: 1 min. 40 sec. - 2 min.
Time sheet left to cool: 20 sec. - 40 sec.

**Claims**

1. A method of heating a kneaded marine paste product in a heating chamber to coagulate the proteins of said paste product, which comprises carrying out heating under the conditions of:

(A) blowing superheated steam as the heating source into the heating chamber;

(B) preventing the paste product from being contacted directly by the superheated steam being blown in its initial blown direction into the chamber; and

(C) controlling the temperature of the gas phase in the vicinity of the paste product at less than 100°C.

2. A method according to Claim 1, wherein the paste product is placed on a belt conveyer in the heating chamber and is thereby continually moved during the heating operation.

3. A method according to Claim 2, wherein the superheated steam is blown toward the lower side of the belt conveyer.

4. A method according to any of Claims 1 to 3, wherein the paste product is a sheet product or fibrous product with engraved grooves.

**Patentansprüche**

1. Verfahren zum Erhitzen eines Produkts aus gekneteter Fischpaste in einer Heizkammer zwecks Koagulation der Proteine des Pastenprodukts, dadurch gekennzeichnet, daß das Erhitzen unter folgenden Bedingungen durchgeführt wird:

(A) als Heizquelle wird überhitzter Dampf in die Heizkammer geblasen;

(B) es wird verhindert, daß das Pastenprodukt unmittelbar von dem überhitzten Dampf berührt wird, der in seiner ursprünglichen Richtung in die Kammer eingeblasen wird; und

(C) die Temperatur der Gasphase in der Umgebung des Pastenprodukts wird unter 100°C gehalten.

2. Verfahren nach Anspruch 1, bei dem das Pastenprodukt sich in der Heizkammer auf einem Bandförderer befindet und damit während des Erhitzungsvorgangs kontinuierlich bewegt wird.

3. Verfahren nach Anspruch 2, bei dem der überhitzte Dampf gegen die Unterseite des Bandförderers geblasen wird.

4. Verfahren nach einem der Ansprüche 1 bis 3, bei dem das Pastenprodukt ein blattförmiges Produkt oder ein faseriges Produkt mit eingeformten Rillen ist.

**Revendications**

1. Un procédé de chauffage d'un produit de pâte marine pétrie dans une chambre de chauffage pour coaguler les protéines dudit produit de pâte, qui comprend la mise en oeuvre du chauffage dans les conditions suivantes:

(A) insufflation de la vapeur surchauffée comme source de chauffage dans la chambre de chauffage;

(B) empêchement du produit de pâte d'être en contact direct avec la vapeur surchauffée insufflée dans sa direction initiale d'insufflation dans la chambre; et

(C) contrôle de la température de la phase gazeuse au voisinage du produit de pâte à une valeur inférieure à 100°C.

2. Un procédé selon la revendication 1, selon lequel le produit de pâte est placé sur une courroie convoyeuse dans la chambre de chauffage et est ainsi déplacé continuellement durant l'opération de chauffage.

3. Un procédé selon la revendication 2, selon lequel la vapeur surchauffée est insufflée dans la direction du côté inférieur de la courroie convoyeuse.

4. Un procédé selon l'une quelconque des revendications 1 à 3, selon lequel le produit de pâte est un produit en feuille ou un produit fibreux avec des rainures gravées.